Europäisches Patentamt

European Patent Office

Office européen des brevets

(19)

(11) Publication number: **0 261 356**
**B1**

(12) **EUROPEAN PATENT SPECIFICATION**

(45) Date of publication of the patent specification:
27.12.90

(51) Int. Cl.⁵: **H01Q 15/00, B25J 9/00**

(21) Application number: **87111162.1**

(22) Date of filing: **03.08.87**

(54) Method of manufacturing dichroic antenna structures.

(30) Priority: **04.08.86 IT 6762886**

(43) Date of publication of application:
**30.03.88 Bulletin 88/13**

(45) Publication of the grant of the patent:
**27.12.90 Bulletin 90/52**

(84) Designated Contracting States:
**DE FR GB NL SE**

(56) References cited:
**EP-A- 0 178 011**
**US-A- 4 001 836**

**IEEE TRANSACTIONS ON ANTENNAS AND PROPAGATION, vol. AP-27, no. 4, July 1979; pages 466-473; V.D. AGRAWAL et al.: "Design of a dichroic cassegrain subreflector"**

(73) Proprietor: **CSELT Centro Studi e Laboratori Telecomunicazioni S.p.A., Via Guglielmo Reiss Romoli, 274, I-10148 Turin(IT)**

(72) Inventor: **Bielli, Paolo, Via Torino 140, Benne di Corio (Torino)(IT)**
Inventor: **Bresciani, Danielle, Via Marsigli 96, Torino(IT)**
Inventor: **Contu, Salvatore, Strada Eremo 120, Pecetto Torinese (Torino)(IT)**
Inventor: **Cocito, Guiseppe, Via M. d'Azeglio 15, San Giusto Canavese (Torino)(IT)**

(74) Representative: **Riederer Freiherr von Paar zu Schönau, Anton et al, Van der Werth, Lederer & Riederer Freyung 615 Postfach 2664, D-8300 Landshut(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention concerns telecommunications equipment using electromagnetic radiations belonging to microwave range and more particularly a method of manufacturing dichroic antenna structures. The term "dichroic" means that the structure exhibits different properties at different frequencies and polarizations.

As known, a dichroic antenna structure consists of a surface presenting transmissive properties for radiations at certain frequencies and polarization and reflective properties for other radiations.

The most-widely used shapes for said surface are the round paraboloid, the round or double-curved ellipsoid, etc.; generally the shape is the one suited to implement a reflector or subreflector of a microwave antenna system. This surface is made on a substrate of a dielectric material with good mechanical properties, whereupon a conductive grid is deposited consisting of a plurality of selective antenna elements. This grid is generally built up by using elements having the shapes of a ring, cross, strip, etc. The dimensions of the elements generally depend on the wavelength of the operative electromagnetic radiation, and the permitted tolerances, both in dimensions and in the distances between the elements (interaxis), are equal to a few thousandths of the wavelength of the reflected electromagnetic field; for instance, at a frequency of 20 GHz, the accuracy demanded is + or −100 μm. Hence difficulties are encountered in implementing with the desired accuracy the great number of necessary antenna elements, taking into account, in addition, that they are to be arranged on a curved surface.

The elements above are generally fabricated according to the method used for manufacturing printed circuits, using photographic masking and chemical etching of unwanted parts. However, the implementation of such method is not without difficulties, since the mask can be only obtained on a plane surface, while the substrate onto which it is to be projected presents a curved surface of the previously mentioned type.

A number of solutions to this problem are known in the art, namely that described in the paper entitled "Design of a Dichroic Cassegrain Subreflector" by Vishwani D. Agrawal et alii, which issued in IEEE Transactions on Antennas and Propagation, Vol. AP27, No. 4, July 1979. The dichroic surface, consisting of crossed dipoles, is fabricated according to a photoetching technique on a plane kevlar substrate. This is afterwards laid on an aluminium mold of desired shape, is covered with layers of protective material and is pressed against the mold in a vacuum bag. The layer series is finally baked in a high-temperature oven. The accuracy attainable by this method is not so high since the deformations undergone by the originally plane dichroic surface, when pressed against the curved mold, cannot be controlled. In fact these deformations depend on many factors difficult to control, such as the constant thickness of the substrate, the uniformity of pressure exerted, etc.

Another solution is described in US Patent No. 4 001 836. According to this patent, a planar strip assembly is etched to form a conductive grid and afterwards folded info a perabolic configuration. Clearly, this method is not so satisfactory both because the strips must be manually deposited and because it is time consuming. Moreover the solution is valid only for parabolic surfaces.

The disadvantages above are overcome by the method provided by the present invention, which allows a dichroic antenna structure to be directly made on an arbitrary curved surface, with elements of whatever shape and with high accuracy in dimensions and position, using a fully automatic method. This method is defined in claim 1.

The photo-etching method does not damage the dielectric substrate which supports the metallic grid of the antenna elements. The projector is always kept at a constant distance from the surface by the arm of the computer-controlled machine and thus the optical system need not be continually re-focalized to follow the curvature of the reflector surface. The projector containing a mask which represents a single element or points of a single element, and the projector being placed in a position perpendicular to the surface before the projection, the pattern on the mask is not required to be predistorted for matching with the reflector curvature.

These and other characteristics of the present invention will be made clearer by the following description of a preferred embodiment thereof given by way of example and not in a limiting sense, and by the annexed drawings in which;

 – Fig. 1 shows various possible selective antenna elements;

 – Fig. 2 is a perspective view of an assembling robot;

 – Fig. 3 is a schematic section of a projector;

 – Fig. 4 shows two masks for the projection of antenna elements.

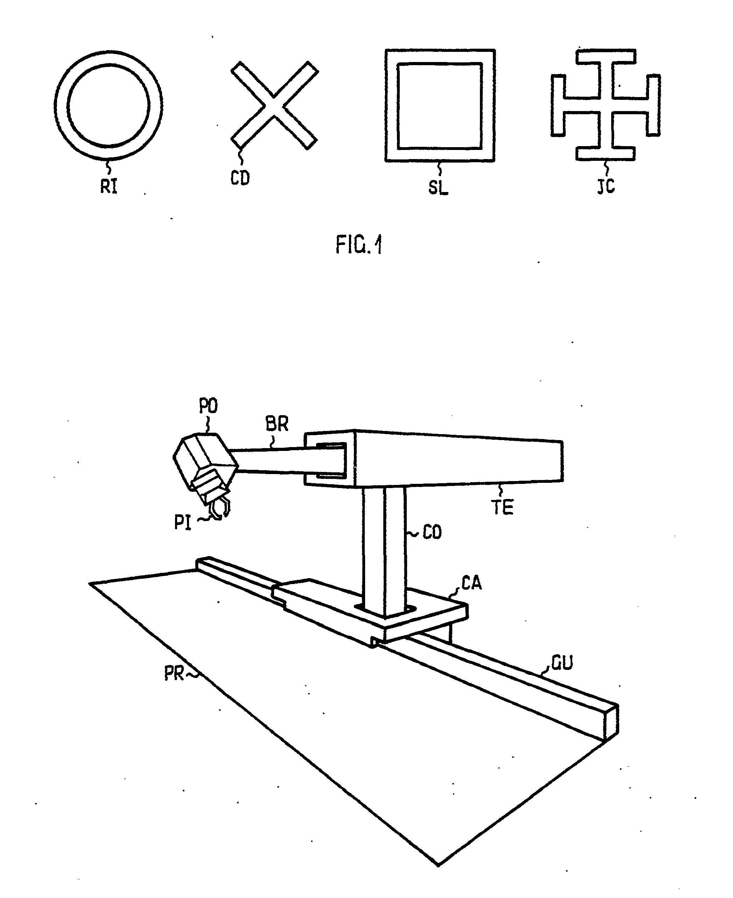

The following description concerns a method of fabricating a dichroic antenna structure of the type described in the paper entitled "Dichroic Subreflectors for Multifrequency Antennas" by P. Bielli et alii, which issued on CSELT Technical Reports – Vol. XIII No. 7, December 1985. More particularly, the paper illustrates the complex series of insulating and conductive structures, forming a dichroic subreflector, and some typical selective antenna elements. For greater convenience, the latter are also represented in Fig. 1. References RI, CD, SL, JC denote elements shaped as a ring, a crossed dipole, a square loop and a Jerusalem cross.

According to the invention method, the substrate made of dielectric material, acting as a support to the grid of antenna elements, is fabricated first. This substrate can be obtained by machining the material by a computer-controlled machine equipped with a cutterhead, or by pressing it in a mold obtained in the same way. Its side surfaces at least one of which is curved and presents a convexity or a concavity are one or both then covered with a uniform-thickness metallic layer, depending on whether one or two grids are desired.

A layer of suitable photographic emulsion is then deposited on the metallic layer, to protect once developed the parts which are not to be etched by the chemical bath. Fabrication of this layer requires particular care, in order to obtain a thickness as uniform as possible. This renders the antenna elements more accurate, limiting the collimation errors which can occur during the mask projecting step. The layer can be meade e.g. by successive sprayings effected by a computer-controlled machine of the type which will be described hereinafter, to whose mobile arm a suitable sprayer is fixed.

The structure prepared in this way is then placed on the surface plate of a computer-controlled machine, supplied with the parameters describing exactly its shape. This machine must be equipped with an arm with at least 5 out 6 possible degrees of freedom, namely the three translations along the Cartesian axes and the three rotations around the same axes.

A photographic projector is placed at the end of the arm, which will be described hereinafter. This projector can project upon command the mask representing an antenna element, or a tiny light spot which allows the shape of the antenna element to be drawn. In the former case, a suitable program controls the arm so as to translate the projector to the various positions where the centres of the single elements are to be found and hence rotate the projector so that the optical axis may coincide with the line perpendicular to the surface at the central point. If the element is a loop, one can immediately start with the projection; if however it is a dipole or a cross, the sixth degree of freedom is to be exploited to orient the mask according to the desired polarization plane, hence the projection can be carried out under the program control.

In the latter case, i.e. in the case in which the projector is onyl capable of projecting a light spot, the program makes the arm draw the entire shape of the antenna element with continuous displacements, controlling in the same time the direction of the projector axis so as to maintain it always normal to the surface, in particular when long strips are to be implemented for a polarization dichroic.

Presently various types of suitable computer-controlled machines are commercially available. A first type consists of the socalled measuring machines. They are equipped with a bridge capable of translating along a surface plate, while a carriage supported by the bridge can translate perpendicularly to the bridge movement. The carriage supports an arm which can be displaced in height and which bears the measuring probe with possibility of two rotating movements, for an amount of 5 degrees of freedom. The measuring probe can be easily replaced by the already-mentioned projector to implement the invention method. The accuracy degree of this machine is very high, even + or –1 μm.

Another kind of computer-controlled machine is the so-called assembling robot. A typical embodiment of this machine is shown in Fig. 2. It is supplied with a surface plate PR and with an arm BR equipped with a pincers PI, whereto the projector can be applied. The degrees of freedom are still 5, namely, a movement of carriage CA inside the guide GU along axis x, a movement of column CO inside the guide obtained in carriage CA along axis z and a movement of arm BR inside the guide of headstock TE along axis y. Then two possible rotations are possible: rotation of wrist PO around the axis of arm BR and that of pincers PI around itself. Accuracy is generally lower than that of measuring machines; typical tolerances are of the order of + or –25 μm.

Also anthropomorph robots presenting 6 degrees of freedom and tolerances of + or –100 μm can be used.

After all selective antenna elements have been projected onto one surface or both surfaces of the insulating substrate, the photographic emulsion is developed and chemical etching of the unwanted parts of the conductive layer is carried out.

A kind of projector suited to the method of the invention is shown in Fig. 3.It comprises a punctiform light source SP, e.g. a semiconductor laser or a laser of another kind, duly cooled by an electric fan VE so as to avoid attitude variations due to too high thermal expansion. This is particularly necessary when the light source presents high power dissipation. A diaphragm DI and an optical condenser CO are placed before the source. The light beam outgoing from CO traverses mask MA, whereupon the shape of the figure to be projected is reproduced and is focalized by a projecting objective OP. OP can be adjusted thus as to allow focusing of the image on the surface of the dichroic structure and possible magnifications or reductions of the same figure. The projection objective ought to present a good field depth so as to reduce to the minimum the deformations due to the projection onto a generally-curved surface. Also mask MA can be exactly centered by adjusting devices DC. Finally, a flange FL allows the projector to be fixed to the mobile arm of the computer-controlled machine.

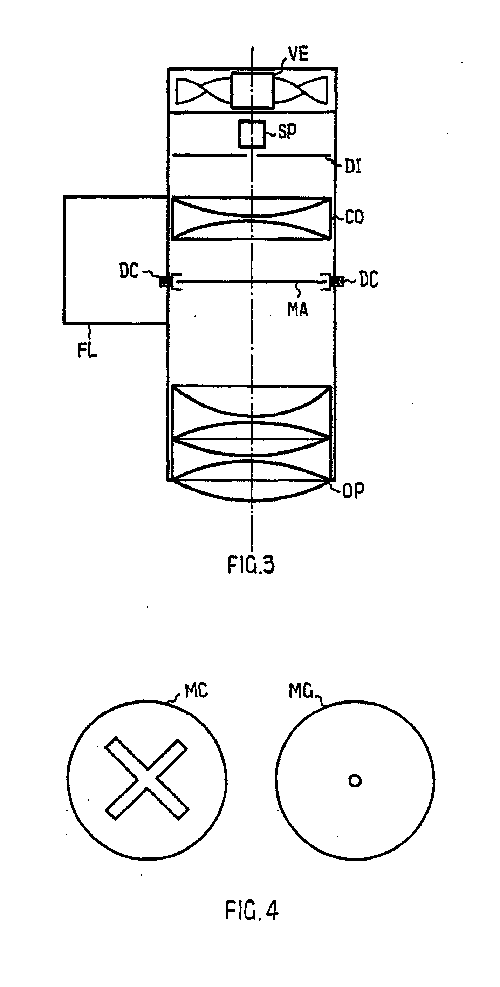

Figure 4 shows 2 masks MC and MG, which can be used to project respectively a cross-shaped element and a light spot for drawing whatever figure.

It is clear that what described has been only by way of non-limiting example. Variations and modifications are possible without going out of the scope of the invention.

## Claims

1. A method of manufacturing dichroic antenna structures, consisting of at least one dielectric substrate with one or both surfaces covered with conductive selective antenna elements, comprising the following steps:
    – forming an antenna substrate of dielectric material into a desired shape, and subsequently carrying out the following steps:
    – metallising one or both sides of said substrate;
    – depositing a uniform layer of photographic emulsion on each metallic layer;
    – projecting the shapes of the antenna elements onto the photographic emulsion;
    – developing the emulsion; and
    – chemically etching away the unwanted parts of said metallic layer or layers,

characterized in that said desired shape provides a curved surface on at least one side of said substrate, and said projecting step is performed by a projector mounted on the mobile arm of a computer controlled machine.

2. A method as in claim 1, characterized in that said dielectric substrate is formed by using said computer-controlled machine to whose mobile arm a cutterhead is fixed.

3. A method as in claim 1, characterized in that said dielectric substrate is formed by using a mold made with said computer-controlled machine to whose mobile arm a cutterhead is fixed.

4. A method as in any of claims 1 to 3, characterized in that a uniform layer of photographic emulsion is deposited on said metallic layer using said computer-controlled machine to whose mobile arm a sprayer is fixed.

5. A method as in any of claims 1 to 4, characterized in that each selective antenna element is wholly projected in correspondence with the desired positions on the metallic layer.

6. A method as in any of claims 1 to 4, characterized in that each selective antenna element is projected point by point in correspondence with the desired positions on the metallic layer.

7. A method as in any of claims 1 to 6, characterized in that said computer-controlled machine is a measuring machine.

8. A method as in any of claims 1 to 6, characterized in that said computer-controlled machine is an assembling robot.

9. A method as in any of claims 1 to 6, characterized in that said computer-controlled machine is an anthropomorph robot.

**Revendications**

1. Procédé pour la fabrication de structures dichroïques d'antenne, formées, au moins, d'un substrat diélectrique avec l'une ou les deux surfaces recouvertes des éléments sélectifs d'antenne en matériau conducteur, qui comprend les phases suivantes:
— formation d'un substrat pour antenne de matériau diélectrique dans la forme voulue, et puis effectuation des phases suivantes:
— métallisation d'une ou des deux surfaces latérales dudit substrat;
— dépôt sur chaque couche métallique d'une couche uniforme d'émulsion photographique;
— protection des formes desdits éléments d'antenne sur ladite émulsion photographique;
— développement de ladite émulsion; et
— ablation chimique des parties non désirées de ladite ou desdites couches métalliques,
caractérisé en ce que ladite forme désirée fournit une surface courbe sur au moins une surface latérale, et ladite phase de projection est effectuée à l'aide d'un projecteur monté sur le bras mobile d'une machine contrôlée par un ordinateur.

2. Procédé selon la revendication 1, caractérisé en ce que ledit substrat diélectrique est obtenue en utilisant ladite machine contrôlée par un ordinateur, au bras mobile de laquelle on a fixé une fraise.

3. Procédé selon la revendication 1, caractérisé en ce que ledit substrat diélectrique est formée en employant une moule fabriquée par ladite machine contrôlée par un ordinateur, au bras mobile de laquelle on a fixé une fraise.

4. Procédé selon une quelconque des revendications 1 à 3, caractérisé en ce qu'une couche uniforme d'émulsion photografique est déposée sur ladite couche métallique utilisant ladite machine contrôlée par un ordinateur, au bras mobile de laquelle on a fixé un pistolet.

5. Procédé selon une quelconque des revendications 1 à 4, caractérisé en ce que chaque élément sélectif d'antenne est projété complètement en correspondance des positions désirées sur la couche métallique.

6. Procédé selon une quelconque des revendications 1 à 4, caracétrisé en ce que chaque élément sélectif d'antenne est projété point à point en correspondence avec les positions désirées sur la couche métallique.

7. Procédé selon une quelconque des revendications 1 à 6, caractérisé en ce que ladite machine contrôlée par un ordinateur est une machine de mesure.

8. Procédé selon une quelconque des revendications 1 à 6, caractérisé en ce que ladite machine contrôlée par un ordinateur est un robot d'assemblage.

9. Procédé selon une quelconque des revendications 1 à 6, caractérisé en ce que ladite machine contrôlée par un ordinateur est un robot anthropomorfe.

**Patentansprüche**

1. Verfahren zum Herstellen von Antennenkörpern für zwei Frequenzen, wobei die Antennenkörper aus mindestens einem dielektrischen Substrat bestehen, dessen eine oder beide Seitenflächen mit leitenden selektiven Antennenelementen bedeckt ist bzw. sind, mit den folgenden Verfahrensschritten:
— Bilden eines Antennensubstrats aus dielektrischem Material mit einer gewünschten Form, und anschließendes Durchführen der folgenden Schritte:
— Metallisierung einer oder beider Seiten des Substrats;
— Aufbringen einer gleichförmigen Schicht einer fotografischen Emulsion auf jeder Metallschicht;
— Projizieren der Formen der Antennenelemente auf die fotografische Emulsion;
— Entwickeln der Emulsion; und
— chemisches Wegätzen der unerwünschten Teile der metallischen Schicht oder Schichten,
dadurch gekennzeichnet, daß die gewünschte Form eine gekrümmte Fläche auf wenigstens einer Seite des Substrats schafft, und der Projektionsschritt mit Hilfe eines auf einem mobilen Arm einer computergesteuerten Maschine montierten Projektors durchgeführt wird.

2. Verfahren nach Anspruch 1, dadurch gekennzeichnet, daß man das dielektrische Substrat unter Verwendung der computergesteuerten Maschine herstellt, an deren mobilem Arm ein Schneidkopf befestigt ist.

3. Verfahren nach Anspruch 1, dadurch gekennzeichnet, daß man das dielektrische Substrat unter Verwendung einer Form herstellt, die mit der computergesteuerten Maschine hergestellt ist, an deren mobilem Arm ein Schneidkopf befestigt ist.

4. Verfahren nach einem der Ansprüche 1 bis 3, dadurch gekennzeichnet, daß man eine gleichförmige Schicht fotografischer Emulsion auf der metallenen Schicht unter Verwendung der computergesteuerten Maschine, an deren mobilem Arm eine Sprühvorrichtung befestigt ist, aufbringt.

5. Verfahren nach einem der Ansprüche 1 bis 4, dadurch gekennzeichnet, daß jedes selektive Antennenelement in seiner Gesamtheit in Übereinstimmung mit den gewünschten Positionen auf der metallenen Schicht projiziert wird.

6. Verfahren nach einem der Ansprüche 1 bis 4, dadurch gekennzeichnet, daß jedes selektive Antennenelement punktweise in Übereinstimmung mit den gewünschten Positionen auf der metallenen Schicht projiziert wird.

7. Verfahren nach einem der Ansprüche 1 bis 6, dadurch gekennzeichnet, daß die computergesteuerte Maschine eine Meßmaschine ist.

8. Verfahren nach einem der Ansprüche 1 bis 6, dadurch gekennzeichnet, daß die computergesteuerte Maschine ein Montageautomat ist.

9. Verfahren nach einem der Ansprüche 1 bis 6, dadurch gekennzeichnet, daß die computergesteuerte Maschine ein anthropomorpher Automat ist.

RI

CD

SL

JC

FIG. 1

PO

BR

TE

PI

CO

CA

PR

GU

FIG.3

FIG. 4